# EUROPÄISCHE PATENTANMELDUNG

(11) **EP 0 913 686 A2**
(43) Veröffentlichungstag der Anmeldung: **06.05.1999**
(21) Anmeldenummer: 98119169.5
(22) Anmeldetag: 10.10.1998
(51) Int. Cl.: G01N 27/401

(54) **Brückenkörper für eine Elektrode**

(30) Priorität: 30.10.1997 DE 19748052
(71) Anmelder: Haaf, Dieter, D-74924 Neckarbischofsheim (DE)
(72) Erfinder: Haaf, Dieter, D-74924 Neckarbischofsheim (DE)
(74) Vertreter: Winter, Martina Dr.

(57) **Zusammenfassung**

Die vorliegende Erfindung betrifft einen Brückenkörper (5, 35) für eine Elektrode (1, 30) zum Messen elektrochemischer Größen, insbesondere zur Ionenaktivtätsmessung einer Probe, aus einem festen, elektrisch leitenden, chemisch inerten Material. Erfindungsgemäß ist vorgesehen, daß er aus einer mit Salzen dotierten Keramik und/oder einem mit salzen dotierten Glas und/oder aus einer Mischung daraus besteht. Die Erfindung betrifft ferner eine Elektrode mit einem solchen Brückenkörper. Damit sind Messungen im hochalkalischen Bereich und in Gegenwart organischer Lösemittel möglich. Die erfindungsgemäße Elektrode ist auch zur Miniaturisierung geeignet.

## Beschreibung

Die Erfindung betrifft einen Brückenkörper für eine Elektrode zum Messen elektrochemischer Großen, insbesondere zur Ionenaktivitätsmessung einer Probe, aus einem festen, elektrisch leitenden, chemisch inerten Material sowie eine Elektrode mit einem solchen Brückenkörper.

Ein gattungsgemäßer Werkstoff ist aus dem deutschen Gebrauchsmuster G 90 17 038 bekannt. Dieser Werkstoff besteht im wesentlichen aus einem Polymer, welches mit in einem organischen Lösemittel gelösten Ionen dotiert ist.

Ein gattungsgemäßer Brückenkörper und eine gattungsgemäße Elektrode sind ferner aus der DE 43 29 742 A1 bekannt. Diese Elektrode besteht aus einem festen metallischen Elektrodenkörper, der mit einer dünnen leitenden Schicht aus einem Salz des Metalls des Elektrodenkörpers überzogen ist. Als äußerste Schicht ist ein Brückenkörper vorgesehen. Zwischen dem Brückenkörper und dem Elektrodenkörper bzw. dem Metallsalz kann eine Kompensationsschicht vorgesehen sein.

Der Brückenkörper ist aus einem mit Salzen dotierten Kunststoff hergestellt. Die dazu geeigneten Kunststoffe sind Epoxidharze und Polyvinylester. Problematisch an dieser bekannten Elektrode ist, daß sie für Messungen im hochalkalischen Bereich und in Gegenwart organischer Lösemittel wie z. Bsp. Aceton nicht geeignet ist., da die Kunststoffe gegenüber Alkalien bzw. organischen Lösemitteln empfindlich sind und angegriffen werden.

Ferner sind Elektroden mit einem Diaphragma bekannt, die an und für sich im hochalkalischen Bereich bzw. in Gegenwart organischer Lösemittel eingesetzt werden können. Diese Elektroden haben aber den Nachteil, das Proben bzw. Probenflüssigkeit durch das Diaphragma in das Innere der Elektrode eindringen kann. Das hat zum einen zur Folge, daß der Elektrolyt im Inneren der Elektrode vergiftet wird. Zum anderen Werden die Porenöffnungen des Diaphragmas mit der Zeit verstopft. Derartige Elektroden sind daher sehr wartungsintensiv und werden im hochalkalischen Bereich zunehmend ungenau.

Aufgabe der vorliegenden Erfindung ist es, einen gattungsgemäßen Brückenkörper bzw. eine gattungsgemäße Elektrode bereitzustellen, der bzw. die diese Nachteile nicht aufweist, insbesondere für Messungen im hochalkalischen Bereich und in Gegenwart organischer Lösemittel geeignet ist.

Die Lösung besteht darin, daß der Brückenkörper aus einer mit Salzen dotierten Keramik und/oder einem mit Salzen dotierten Glas und/oder einer Mischung daraus besteht bzw. daß die Elektrode einen derartigen Brückenkörper aufweist.

Der erfindungsgemäße Brückenkörper bzw. die erfindungsgemäße Elektrode können also aus einem dotierten Glas oder einer dotierten Keramik oder einer Mischung, also einer 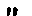 Glaskeramik", bestehen. Insbesondere mit Mischungen aus Glas und Keramik erzielt man gute Ergebnisse. Gleiches gilt für erfindungsgemäße Brückenkörper aus einer dotierten Keramik mit einem dotierten Glasüberzug. Diese Gestaltung kann sowohl bei einer Referenzelektrode als auch bei einer Meßelektrode verwirklicht werden, so daß in besonders vorteilhafter Weise eine symmetrische Meßkette hergestellt werden kann. Eine derartige symmetrische Meßkette erleichtert die Temperaturkompensation.

Der erfindungsgemäße Brückenkörper bzw. die erfindungsgemäße Elektrode sind sowohl gegenüber Alkalien als auch gegenüber organischen Lösemitteln wie z. Bsp. Aceton beständig. Überraschenderweise und für den Fachmann unerwartet hat sich herausgestellt, daß mit Salzen dotierte Keramiken bzw. mit Salzen dotierte Gläser oder Mischungen daraus ausgezeichnete Brückenkörper darstellen. Die mit einem solchen Brückenkörper herstellbaren Referenzelektroden sind für Messungen in hochalkalischen Medien, aber auch in organische Lösemittel enthaltenden Medien geeignet. Bspw. können sie zum Vermessen von Wasserlack-Suspensionen verwendet werden, in denen erfahrungsgemäß Anteile von Lösemitteln enthalten sind.

Vorteilhafte Weiterbildungen der vorliegenden Erfindung ergeben sich aus den Unteransprüchen. Kaliumchlorid, Neutralsalze und insbesondere eine Mischung aus Kaliumchlorid und Natriumchlorid sind besonders gut geeignet. Aber auch andere Salze bzw. Salzmischungen, deren Ionen in ihrer Summe in etwa gleiche Ionenbeweglichkeit und gleiche überführungszahl von Anionen und Kationen aufweisen, können verwendet werden. Geeignet sind ferner ein oder mehrere Polymere, die in einem organischen Lösemittel gelöste Ionen aufweisen, wie sie in dem deutschen Gebrauchsmuster G 90 17 036.9 beschrieben sind. Das Polymer kann ein Duroplast wie z. Bsp. ein Polyesterharz oder ein Epoxidharz oder ein nicht halogenisierter oder halogenisierter Thermoplast wie z. Bsp. Polyethylen, Polypropylen bzw. Polyvinylchlorid, Polytetrafluorethylen sein. Die Ionen von z. Bsp. Lithiumchlorid oder Tetraethylammoniumchlorid, können in Methanol, Ethanol oder Isopropanol gelöst sein. Für Referenzelektroden ist auch eine dem Betrag nach gleiche Ladung von Kationen und Anionen des dotierten Salzes wichtig.

Als Basismischung dient vorzugsweise eine Mischung aus Kaliumchlorid und Natriumchlorid im Verhältnis von etwa 2: 1. Das Mischungsverhältnis ist je nach Anwendungsbereich auch variabel und kann vom Fachmann berechnet werden; die Feineinstellung kann vom Fachmann auch durch Versuche vorgenommen werden.

Der Zusatz von Lithiumsalzen ist vorteilhaft, da diese hygroskopisch sind und somit das Material des Brückenkörpers immer ein wenig feucht halten. Diese Maßnahme verkürzt die Konditionierung in Wasser, die bei der erfindungsgemäßen Elektrode empfehlenswert ist. Die Zeitdauer der Konditionierung hängt üblicherweise insbesondere von der Temperatur ab, bei der sie vorgenommen wird, bspw. etwa 30 min bei Raumtemperatur oder etwa 5 min bei 130°C. Enthält die erfindungsgemäße Elektrode hygroskopische Salze, benötigt man nur einige Minuten bei Raumtemperatur.

Der Zusatz von Fluoriden erhöht die Säurebeständigkeit des Brückenkörpers. Lithiumsalze und Fluoride sind vorzugsweise in einem Anteil von je etwa 5 Gew.-% der Kaliumchlorid/Natriumchlorid-Mischung zugesetzt.

Als keramisches Material für den Brückenkörper eignen sich alle gängigen Keramiken, insbesondere Metalloxidkeramiken. Man kann eine Gießkeramik einsetzen, die mit Wasser angerührt wird. Die Masse wird dann mit den Salzen dotiert, vorgehärtet und durch Erwärmen ausgehärtet. Man kann auch Pulverkeramiken verwenden, die mit den Salzen vermischt und geschmolzen bzw. gesintert werden. Geeignet ist z. Bsp. eine Pulverkeramik, wie sie in der Zahntechnik verwendet wird. In diesem Fall werden die Salze in einem Anteil von vorzugsweise etwa 5 - 30 Gew.-% zugesetzt. Bei der Gleßkeramik werden etwa 0,5 bis 3 Mol/l Salze in Wasser gelöst und 1 Liter dieser Lösung auf etwa 4 kg Pulver vermischt. Daraus ergibt sich ein Gewichtsanteil der Salze von etwa 20 Gew.-%.

Statt der Keramik kann der erfindungsgemäße Brückenkörper auch aus einem Glas, d. h. ganz allgemein aus einer Siliziumdioxid-Struktur bestehen. Besonders geeignet ist Blei-Cadmium-Glas, da dies eine besonders glatte Oberfläche aufweist und sich durch einen relativ niedrigen Schmelzpunkt auszeichnet, bei dem die erfindungsgemäß zugesetzten Salze beim Herstellungsprozeß (Sintern, Schmelzen, etc.) nicht verdampfen. Gläser, die Titan, Aktinide und/oder Lanthanide in oxidischer Form, also in Form von Oxiden und/oder Hydroxiden enthalten, weisen vergleichbare Eigenschaften auf und sind ebenfalls geeignet. Bspw. ist ein an und für sich bekanntes, konventionelles Material, welches als Emaillepulver für den Hobbybedarf erhältlich ist, geeignet. Das Pulver wird mit den Salzen vermischt und auf den bereits gesinterten Brückenkörper an der zur Probe kontaktierenden Seite aufgeschmolzen oder dem Brückenkörper vor dem Sintern beigegeben.

Der erfindungsgemäße Brückenkörper läßt sich in einer Vielzahl von Elektroden einsetzen. Bei Meßelektroden reagiert das zur Probe kontaktierende Material des Brückenkörpers ionenselektiv; in Referenzelektroden hingegen ist es chemisch inert. Der Elektrodenkörper besteht vorzugsweise aus einem metallischen Vollmaterial, z. Bsp. Silber oder Quecksilber und ist mit einer dünnen Schicht aus einem Salz oder Salzen dieses Metalls, z. Bsp. Silberchlorid, überzogen, welches wiederum mit dem Bezugselektrolyten in Kontakt steht. Die Verwendung in Referenzelektroden (d.h. mit probenunabhängigem Potential) ist besonders vorteilhaft. Diese ist mit dem erfindungsgemäßen Brückenkörper zu einer ionenselektiven Elektrode erweiterbar. Dies führt wie oben erwähnt zu einer symmetrischen Meßkette mit erleichterter Temperaturkompensation. Auch die Bruchsicherheit kann im Vergleich zur konventionellen Glaselektrode erhöht sein. Bei der Erweiterung dient der Brückenkörper als Träger für ionenselektive Materialien wie z. Bsp. ionenselektives Glas. Geeignet ist z. Bsp. ein auf den Brückenkörper aufgeschmolzenes Glas wie ein pH - Membranglas oder Lanthanfluorid (z. Bsp. ein Monokristall, dotiert mit Europium) zur Fluoridbestimmung, Silberchlorid zur Chloridbestimmung, Silberiodid zur Iodidbestimmung, usw.. Die Phasengrenzen derartiger Elektroden wären dann die folgenden:
- Referenzelektrode:: Metall // Metallsalz // gelöstes Anion und Kation // Brückenkörper // Probe
- Meßelektrode:: Metall // Metallsalz // gelöstes Anion und Kation // Brückenkörper // ionensensitives Material // Probe

Selbstverständlich kann der Brückenkörper auch selbst mit dem ionensensitiven Material dotiert sein.

Besonders vorteilhaft ist die Verwendung als Referenzelektrode zusammen mit üblichen Glaselektroden als Sensor in einer Meßkette. Man kann den erfindungsgemäßen Brückenkörper auch mit konventionellen Ableitelektroden einsetzen. Eine erfindungsgemäße Referenzelektrode läßt sich in der oben beschriebenen Weise zu einer ionenselektiven Elektrode erweitern, so daß symmetrische Meßketten mit einer erfindungsgemäßen Referenzelektrode und einer erfindungsgemäßen ionenselektiven Elektrode möglich sind.

Eine weitere vorteilhafte Ausbildung als Elektrode zweiter Art erhält man, wenn zwischen dem Elektrodenkörper bzw. der dünnen Schicht aus Metallsalz und dem Brückenkörper eine Füllung mit einer Salzlösung, insbesondere mit 3-molarer Kaliumchlorid-Lösung vorgesehen ist. Dies entspricht der konventionellen Referenzelektrode für die Ionenaktivitätsmessung wie z. Bsp. die pH-Messung, wobei das konventionelle Diaphragma durch den erfindungsgemäßen Brückenkörper ersetzt ist.

Die mit dem erfindungsgemäßen Brückenkörper versehenen Elektroden sind besonders gut als Referenzelektroden geeignet, da Keramik bzw. Glas nur eine geringe Porosität aufweisen bzw. sogar dicht sind. Der Bezugselektrolyt kann in diesem Fall nicht mit der Meßlösung in Kontakt kommen und somit auch nicht vergiftet werden, und es können nicht, wie bei bekannten Diaphragmen, Kapillaren verstopft werden.

Der erfindungsgemäße Brückenkörper hat den besonders großen Vorteil, daß mit ihm miniaturisierte Elektroden herstellbar sind. Dabei werden die einzelnen Bestandteile, nämlich Elektrodenkörper, Zwischenschicht, Bezugskörper in dieser Reihenfolge auf einem Transistor fixiert. Besonders vorteilhaft ist es, den erfindungsgemäßen Brückenkörper mit Hilfe eines Polymers oder einer Polymermischung als Klebstoff auf einem Transistor zu fixieren. Dabei weisen das oder die Polymere in organischen Lösemitteln gelöste Ionen auf. Dies geht besonders gut mit Brückenkörpern aus Metalloxidkeramiken.

Die mit dem erfindungsgemäßen Brückenkörper herstellbaren Elektroden sind in Zweistabmeßketten und Einstabmeßketten, jeweils mit oder ohne Zweikanalimpedanzwandlung einsetzbar. Sie können beliebig mit konventionellen Elektroden kombiniert werden. Der erfindungsgemäße Brückenkörper kann einen besonders hohen Eingangswiderstand, bspw. über 5 kΩ aufweisen. Durch eine besondere Gestaltung der Schaltung kann die Referenzelektrode wie die Meßelektrode hochohmig behandelt werden. In konventionellen Schaltungen ist das niederohmige Referenzpotential (nach DIN 19260 bis 19268, kleiner 5 kΩ ) praktisch Massepotential. Eine besondere Schaltung mit hochohmiger Behandlung von Meß- und Referenzelektrode empfiehlt sich dann, wenn der Durchgangswiderstand der Referenzelektrode größer als 5 kΩ ist.

Eine beispielhafte Schaltung ist im wesentlichen dieselbe wie in der DE 43 29 742 A1 beschrieben, weshalb zur Vermeidung von Wiederholungen auf diese Druckschrift hingewiesen und die Offenbarung hinsichtlich der dort beschriebenen, auch mit der vorliegenden Erfindung anwendbaren Meßanordnung vollinhaltlich mit einbezogen wird.

Es ist auch möglich, den Durchgangswiderstand der erfindungsgemäßen Elektrode als Referenzelektrode auf unter 5 kΩ zu gestalten, um eine derartige Referenzelektrode mit konventionellen pH-Metern zu betreiben. Dies kann sich allerdings nachteilig auf die chemische Beständigkeit auswirken. In aggressiven Proben mit hohem chemischem Angriff bzw. um die Standzeit der erfindungsgemäßen Elektrode wesentlich zu erhöhen, empfiehlt es sich, die relativ hochohmige Referenzelektrode mit elektrotechnisch hochohmiger Behandlung von Meß- und Referenzelektrode (Zweikanalimpedanzwandlung) einzusetzen.

in Labor und Betrieb sind insbesondere bei der Prozeßüberwachung und Prozeßsteuerung z. Bsp. pH - Meter im Einsatz, die mit Einkanalimpedanzwandlung arbeiten. Bei Verwendung einer erfindungsgemäßen Elektrode als Referenzelektrode kann dem konventionellen pH - Meter bzw. Ionenmeter ein Impedanzwandler für die Referenzelektrode oder für Referenz- und Meßelektrode vorgeschaltet werden.

Die erfindungsgemäße Elektrode kann in beliebiger Bauweise mit anderen Elektroden kombiniert werden, z. Bsp. in einer konzentrischen Anordnung mit einer Meßelektrode in der Mitte, die von einer erfindungsgemäßen Referenzelektrode umschlossen ist.

Im folgenden werden zwei Ausführungsbeipiele der vorliegenden Erfindung anhand der beigefügten Zeichnungen näher beschrieben. Es zeigen:

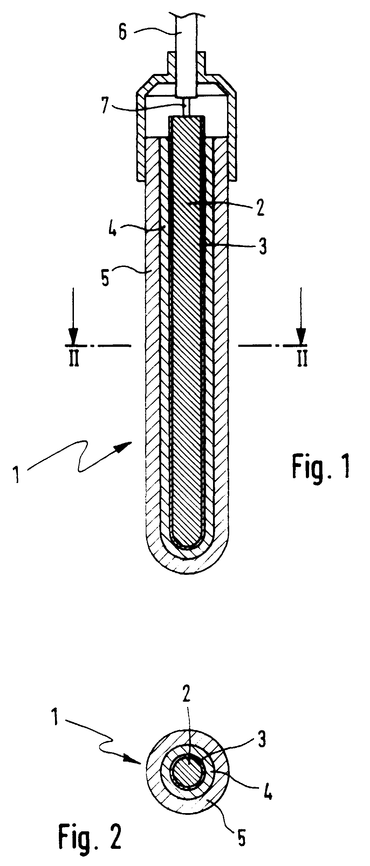

- Figur 1: einen Längsschnitt durch ein erstes Ausführungsbeispiel eine Elektrode;
- Figur 2: einen Schnitt entlang der Linie II-II in Figur 1;
- Figur 3: ein Ausführungsbeispiel einer Schaltung für ein Meßsystem mit einer erfindungsgemäßen Elektrode;
- Figur 4: einen Längsschnitt durch ein Ausführungsbeispiel einer miniaturisierten Elektrode;
- Figur 5: einen schematischen Längsschnitt durch eine miniaturisierte Elektrode.

Das erste Ausführungsbeispiel einer Elektrode 1 besteht aus einem Elektrodenkörper 2 in Form eines massiven Metallstiftes z. Bsp. aus Silber, der mit einer dünnen Schicht 3 aus Salz des Metalls des Elektrodenkörpers 2, in diesem Fall ein Chloridsalz (hier: Silberchlorid), überzogen ist. Der Elektrodenkörper 2 und die Schicht 3 bilden eine Phasengrenzfläche Metall/Metallsalz aus. Beliebige andere Phasengrenzflächen aus Metall/Metallsalz oder auch Metall/Ion sind selbstverständlich möglich.

Der Elektrodenkörper 2 mit der Schicht 3 ist im Ausführungsbeispiel von einer Kompensationsschicht 4 umgeben, welche Ionen der Schicht 3, in diesem Fall also Silberchlorid, enthält. Die Schicht kann aber auch ein Elektrolyt wie z. Bsp. 3-molare KCl-Lösung, sein, die als Referenzelektrolyt dient, so daß man eine Elektrode 2. Art erhält. Diese kann z. Bsp. als Referenzelektrode einer pH-Meßkette dienen. Damit können auch hochalkalische Medien vermessen werden. Die Kompensationsschicht 4 kann aber auch im wesentlichen aus Polymeren bestehen, welche in organischen Lösemitteln gelöste Ionen enthalten.

Die Kompensationsschicht 4 oder wäßrige Lösung stellt die Verbindung von der Ableitelektrode (d. h. der mit der Schicht 3 überzogene Elektrodenkörper 2) zum Brückenkörper her und ist dabei der potentialbestimmende Elektrolyt, der das Bezugspotential festlegt.

Die äußerste Schicht bildet nun der erfindungsgemäße Brückenkörper 5. Er besteht im Ausführungsbeispiel aus einer Metalloxidkeramik, die mit einer Salzmischung dotiert ist. Im Ausführungsbeispiel wurde eine Gießkeramik verwendet.

Zur Herstellung des Brückenkörpers 5 wurde das Keramikpulver mit etwa 20 Gew.-% einer Salzmischung aus Kaliumchlorid und Natriumchlorid im Verhältnis von etwa 2 : 1 sowie Lithiumchlorid und Natriumfluorid gemischt. Der Anteil der beiden letztgenannten Salze betrug etwa je 5 Gew.-% bezogen auf die Kaliumchlorid/Natriumchlorid-Mischung. Die Kaliumchlorid/Natriumchlorid-Mischung im Verhältnis 2 : 1 kann auch als eine Basismischung angesehen werden, deren Zusammensetzung je nach Anwendung des Brückenkörpers bzw. der damit hergestellten Elektrode durch den Fachmann variiert werden kann. Gleiches gilt für die anderen Salzbeimischungen. Zu beachten ist, daß bei gegebener Temperatur die Ionenbeweglichkeit von Anionen und Kationen bei Referenzelektroden in etwa vergleichbar ist bzw. die Überführungszahlen von Anionen und Kationen der verwendeten Salze gleich sind.

Von der Salzmischung wurde eine 2-molare wäßrige Lösung angesetzt. Ein Liter dieser wäßrigen Lösung wird mit 4 kg Gießkeramik-Pulver vermischt. Dies entspricht einem Gewichtsanteil der Salze von in etwa 20 Gew.-%. Die resultierende Mischung wurde in eine Form gegossen, etwa 24 Std. vorgehärtet und anschließend zunächst 2 Std. bei 90°C und dann 2 Std. bei 130°C ausgehärtet.

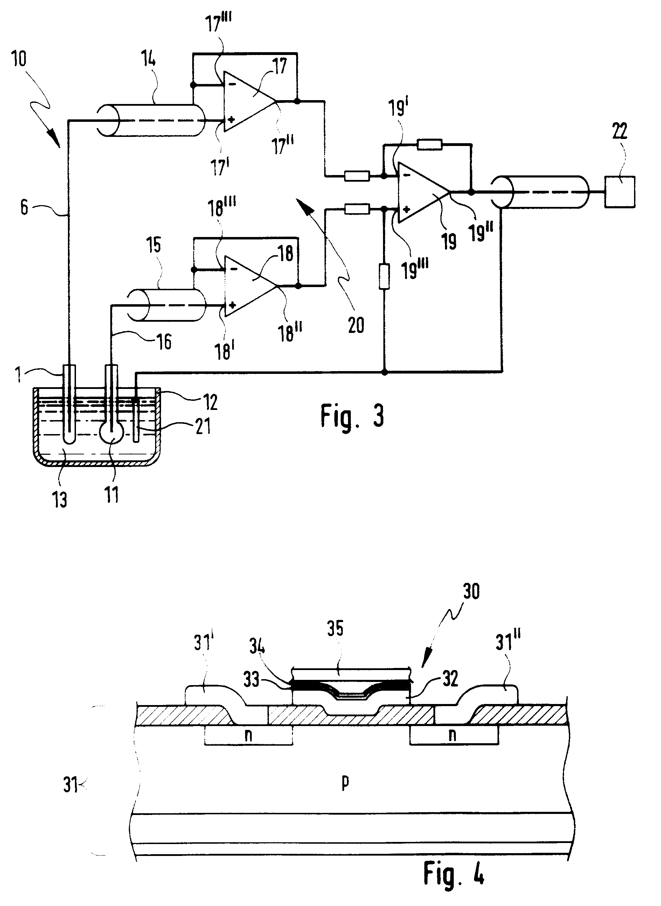

Im Ausführungsbeispiel ist die Elektrode als Referenzelektrode einer Zweistab-Meßkette verbunden, wie sie in Figur 3 dargestellt ist. Die Elektrode 1 ist über Koaxialkabel 6 mit Innenleitern 7 mit einer entsprechenden Meßanordnung 10 verbunden. Die Meßanordnung 10 weist die erfindungsgemäße Elektrode 1 als Referenzelektrode sowie eine konventionelle Meßelektrode 11 auf. Die Elektroden 1,11 tauchen in einen Behälter 12 ein, der die zu vermessende Probe 13 enthält.

Eine Meßelektrode hat im allgemeinen einen hohen Membranwiderstand. Bei einer Glaselektrode kann dieser Widerstand bis zu 1 GΩ betragen. Das Ionenmeter bzw. pH-Meter hat dann einen Eingangswiderstand von mindestens 1 TΩ. Das von einer Elektrode bzw. einem Sensor ausgehende und z. Bsp. zu einem Operationsverstärker geleitete Signal wird daher als 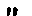 hochohmiges Signal" bezeichnet. Derartige hochohmige Signale sind aber äußerst empfindlich gegenüber elektrodynamischen und elektrostatischen Einwirkungen von außen und tendieren dazu, als sog. 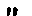 vagabundierende Signale" (Störungen) abzufließen. Daher müssen Elektroden und Kabel zum Schutz vor kapazitiven und induktiven Einflüssen geschirmt sein, so daß derartige Einflüsse an der Schirmung abfließen. Derartige Schirmungen 14, 15 sind in Figur 3 angedeutet.

Die beiden hochohmigen Elektroden 1, 11 sind über Koaxialkabel 6, 16 mit je einem symmetrischen, hochohmigen Eingang 17', 18' je eines Operationsverstärkers 17, 18 verbunden. Das an einem Ausgang 17'', 18'' jedes Operationsverstärkers 17, 18 auftretende Ausgangssignal wird zum einen zu je einem zweiten Eingang 17''', 18''' der Operationsverstärker 17, 18 sowie zu der Abschirmung 14, 15 der zugehörigen Elektrode 1, 11 geführt. Dadurch wird die Kapazität zwischen dem Innenleiter der Koaxialkabel 6, 16 und den Abschirmungen 14, 15 ausgeschaltet. Zum andern werden die Ausgangssignale zu je einem Eingang 19', 19''' eines dritten Operationsverstärkers 19 geführt. Dieser Operationsverstärker wirkt als Differenzverstärker, d. h. es findet eine Differenzbildung zwischen Referenz- und Meßsignal statt. Die drei Operationsverstärker bilden also einen Zweikanal-Impedanzwandler 20. Das am niederohmigen und kapazitiv belastbaren Ausgang 19' des Operationsverstärkers 19 auftretende Ausgangssignal, das über einen Meßwertumformer 22 einer geeigneten Schnittstelle (z. Bsp. Stromschnittstelle, AD-Wandler) zugeführt wird, repräsentiert also die impedanzgewandelte Potentialdifferenz der beiden hochohmigen Elektroden 1, 11.

Die Meßanordnung 10 wird geerdet, indem ein metallischer Kontakt mit der Probe 13 in Verbindung steht. Im Ausführungsbeispiel taucht ein Kontaktstift 21 in die Probe 13 ein. Der Kontaktstift 21 legt somit das Bezugspotential der beiden hochohmigen Eingänge 17', 18' der Operationsverstärker 17, 18 fest. Das elektrochemische Potential des beliebigen (z. Bsp. metallischen) Kontaktstifts 21 hat keinen Einfluß auf die Messung und fällt bei der beschriebenen Differenzmessung somit letztendlich heraus.

In Figur 4 ist schematisch ein Ausführungsbeispiel einer miniaturisierten Elektrode 30 dargestellt. Die Dotierung ist mit 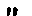 p" und 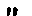 n" bezeichnet. Auf einem Feldeffekt-Transistor, im Ausführungsbeispiel einem selbstsperrenden FET 31 mit Source 31' und Drain 31'' sind auf dem Gate 32 ein dünnes Silberplättchen 33, eine Silberchloridschicht 34 und der oben bereits beschriebene Brückenkörper 35 mit einem Polymer, das in einem organischen Lösemittel gelöste Ionen aufweist, fixiert.

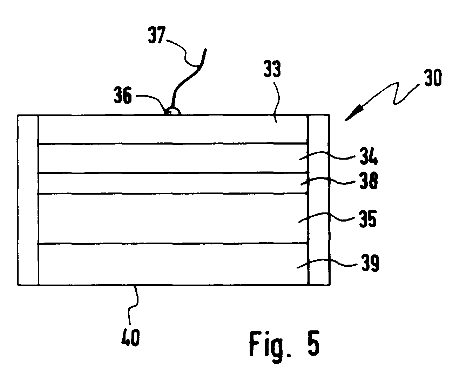

In Figur 5 ist eine derartige miniaturisierte Elektrode 30 noch einmal vergrößert schematisch dargestellt. Die oberste Schicht 33 besteht aus Silber. Sie weist einen elektrischen Kontakt 36, bspw. einen Lötkontakt auf, der die elektrische Verbindung zu einem Kabel 37, einer Schaltung, einem Transistor o. dgl. herstellt. Die nächstfolgende Schicht 34 besteht aus Silberchlorid. Anschließend folgt die Polymerschicht 38, z. Bsp. aus einem Polyesterharz, welches in Methanol gelöstes Lithiumchlorid enthält. Diese Substanz stellt gleichzeitig den Bezugselektrolyten der Elektrode 30 dar. Anschließend folgt der erfindungsgemäße Brückenkörper 35. Wenn die Elektrode 30 eine Referenzelektrode sein soll, ist darauf zu achten, daß die Salze eine in der Summe in etwa gleiche Ionenbeweglichkeit von Anionen und Kationen sowie eine dem Betrag nach gleiche Ladung von Anionen oder Kationen aufweisen. Bei einer Ausbildung als ionenselektive Elektrode kann das ionenselektive Material bereits in den Brückenkörper 35 integriert sein, so daß dieser gleichzeitig als Sensor wirkt. Stattdessen kann aber auch ein ionenselektiver Sensor 39 auf dem Brückenkörper vorgesehen sein. In allen Fällen stellt die Unterseite 40 der Elektrode 30 den Kontakt zu der Probe her, sei es der Brückenkörper 35 oder ein Sensor 39. um dies zu gewährleisten, sind seitlich an der Elektrode 30 Isolierungen 41, 42 angebracht.

Der erfindungsgemäße Brückenkörper und die damit herstellbare erfindungsgemäße Elektrode sind also für Anwendungen geeignet, bei denen konventionelle Elektroden nach dem Stand der Technik bisher versagten. Die in Sandwich-Bauweise herstellbare Elektrode kann nach dem Baukasten-Prinzip je nach dem individuellen Bedarf zusammengesetzt werden.

## Patentansprüche

1. Brückenkörper (5, 35) für eine Elektrode (1,30) zum Messen elektrochemischer Größen, insbesondere zur Ionenaktivtätsmessung einer Probe, aus einem festen, elektrisch leitenden, chemisch inerten Material, dadurch gekennzeichnet, daß er aus einer mit Salzen dotierten Keramik und/oder einem mit Salzen dotierten Glas und/oder aus einer Mischung daraus besteht.

2. Brückenkörper nach Anspruch 1, dadurch gekennzeichnet, daß er aus einer mit Salzen dotierten Keramik besteht, die mit einem mit Salzen dotierten Glas überzogen ist.

3. Brückenkörper nach Anspruch 1 oder 2, dadurch gekennzeichnet, daß die Keramik bzw. das Glas bzw. die Mischung mit einem Salz oder einer Salzmischung, welche in der Summe eine in etwa gleiche Ionenbeweglichkeit von Anionen und Kationen des Salzes bzw. der Salzmischung aufweisen, dotiert ist.

4. Brückenkörper nach Anspruch 3, dadurch gekennzeichnet, daß die Keramik bzw. das Glas bzw. die Mischung mit einem Salz oder einer Salzmischung, welche eine dem Betrag nach gleiche Ladung von Anionen und Kationen aufweisen, dotiert ist.

5. Brückenkörper nach Anspruch 3 oder 4, dadurch gekennzeichnet, daß die Keramik bzw. das Glas bzw. die Mischung mit Kaliumchlorid dotiert ist.

6. Brückenkörper nach Anspruch 3 oder 4, dadurch gekennzeichnet, daß die Keramik bzw. das Glas mit einer Salzmischung dotiert ist, die Kaliumchlorid und Natriumchlorid im Verhältnis von etwa 2 : 1 enthält.

7. Brückenkörper nach einem der vorhergehenden Ansprüche, dadurch gekennzeichnet, daß die Keramik bzw. das Glas bzw. die Mischung mit einem ionensensitiven Material dotiert ist.

8. Brückenkörper nach einem der vorhergehenden Ansprüche, dadurch gekennzeichnet, daß die Salzmischung ferner hygroskopische Salze, insbesondere Lithiumsalze und/oder Fluoride enthält.

9. Brückenkörper nach einem der vorhergehenden Ansprüche, dadurch gekennzeichnet, daß der Anteil der Dotierung etwa 5 - 30 Gew.-%, vorzugsweise etwa 15 - 25 Gew.-% der Keramik bzw. des Glases beträgt.

10. Brückenkörper nach einem der vorhergehenden Ansprüche, dadurch gekennzeichnet, daß die Keramik eine Metalloxidkeramik oder eine nichtoxidische Keramik ist.

11. Brückenkörper nach einem der vorhergehenden Ansprüche, dadurch gekennzeichnet, daß die Keramik eine Gießkeramik oder eine Pulverkeramik ist.

12. Brückenkörper nach einem der vorhergehenden Ansprüche, dadurch gekennzeichnet, daß das Glas ein Blei-cadmium-Glas, oder ein Aktinide, Lanthanide und/oder Titan in oxidischer Form enthaltendes Glas ist.

13. Elektrode (1, 30) zum Messen elektrochemischer Größen einer Probe, mit einem Elektrodenkörper (2, 33), einer leitenden Zwischenschicht (3, 34) und einem Brückenkörper (5, 35) aus einem festen, elektrisch leitenden Material, dadurch gekennzeichnet, daß die Elektrode (1, 30) einen Brückenkörper (5, 35) aus mit Ionen dotierter Keramik und/oder mit Ionen dotiertem Glas und/oder einer Mischung daraus nach einem der Ansprüche 1 bis 12 aufweist.

14. Elektrode nach Anspruch 13, dadurch gekennzeichnet, daß der Elektrodenkörper (2, 33) ein metallischer Körper ist.

15. Elektrode nach Anspruch 13 oder 14, dadurch gekennzeichnet, daß zwischen dem Elektrodenkörper (2, 33) und dem Brückenkörper (5, 35) eine weitere Schicht (4, 38) in Form einer Salzlösung vorgesehen ist.

16. Elektrode nach Anspruch 15, dadurch gekennzeichnet, daß die weitere Schicht (4, 38) im wesentlichen aus einem oder mehreren Polymeren besteht, wobei das oder die Polymere in organischen Lösemitteln gelöste Ionen aufweisen.

17. Elektrode nach einem der vorhergehenden Ansprüche, dadurch gekennzeichnet, daß der Elektrodenkörper (33) in miniaturisierter Form auf einen Transistor (31) aufgebracht ist.

18. Elektrode nach Anspruch 17, dadurch gekennzeichnet, daß der Elektrodenkörper (33) auf dem Gate (32) des Transistors (31) fixiert ist und der Brückenkörper (35) mittels der weiteren Schicht (38) auf dem Elektrodenkörper (33) fixiert ist.

19. Elektrode nach einem der Ansprüche 14 bis 18, dadurch gekennzeichnet, daß sie Teil einer Meßanordnung (10) ist, wobei die Meßanordnung (10) eine potentialtreue Schirmung aufweist.

20. Verwendung mindestens einer Elektrode nach einem der Ansprüche 13 bis 19 in Einstabmeßketten oder Zweistabmeßketten.
